# EUROPEAN PATENT APPLICATION

(11) **EP 1 486 770 A1**
(43) Date of publication of application: **15.12.2004**
(21) Application number: 04396038.4
(22) Date of filing: 09.06.2004
(51) Int. Cl.: G01N 21/25, G01N 21/64

(54) **Time resolved optical measuring method and device**

(30) Priority: 10.06.2003 FI 20030867
(71) Applicant: WALLAC OY, 20101 Turku (FI)
(72) Inventor: Salmelainen, Pauli, 20740 Turku (FI)
(74) Representative: Pirhonen, Kari Lennart

(57) **Abstract**

An optical method for measuring a liquid sample (24) placed in a sample well (21), in which method the liquid sample (24) is exposed to excitation light (32) obtained from an excitation light source (30) from below the sample well through a transparent bottom (23). The excitation light is directed towards the sample well preferably as a conical light beam, which in the area of the sample well has a width mainly corresponding to the width of the sample well. The distance of the excitation light source from the bottom of the sample well is adjusted so that the excitation light beam is the size of the transparent bottom of the sample well. In an optical measuring device (10), an emission light shutter (50) is provided between the sample well and an emission light detector (12), and the shutter plate (51) has a glossy surface on the side facing towards the sample well. The measuring device may comprise a plurality of detectors placed side by side for simultaneous measurement of a plurality of sample wells. The device may also comprise a plurality of excitation light lasers placed side by side.

## Description

### SUBJECT OF THE INVENTION

The present invention relates to a time-resolved optical method for measuring a liquid sample placed in a sample well, according to which method the liquid sample in the sample well is exposed to excitation light from an excitation light source, whereupon the emission light produced by the excitation is measured by means of a detector.

### PRIOR ART

Several sample measuring methods based on luminescence are known wherein emission light is produced in the sample by an excitation applied to the sample. By measuring the emission light, desired properties of the sample can be determined. A much used luminescence measuring method is photoluminescence measurement, wherein emission light is produced by the action of an excitation light. One of the sub-categories of photoluminescence measurement is fluorescence measurement. Another measuring method based on luminescence is chemo-luminescence measurement, wherein an emission light is produced by a chemical reaction. Besides these, a further known method is the so called AlphaScreen photochemical measurement, wherein an emission light is produced by the action of both an excitation light and a chemical reaction.

Prior-art measuring methods and devices are disclosed in specifications US 6,538,735 B1, EP 0987 540 A2, US 5,892,234EP 1 340 973 A1 and US 4,954,714, among others. In patent specification US 6,538,735, the source of excitation light is a laser, the light of which is conducted via lenses and optical fibers to the sample from above the sample well. The emission light is also collected from above the sample to a photomultiplier detector via a second optical fiber bundle, lenses and a mechanical shutter.

In many methods based on photoluminescence, the emission light produced in the sample by the excitation light is so weak that it is advantageous to use photon counting, in which case all individual photons received by the detector are counted separately. Therefore, the measuring times become relatively long and the measurement is liable to errors due e.g. to background radiation. For this reason, the measuring device should be able to detect the weak emission light as effectively as possible.

In the measuring device described e.g. in the aforesaid US patent specification 6,538,735, the emission light coming from the sample is passed through lenses and optical fibers. Therefore, some of the emission light is lost on the way and the performance of the device is poor. If the emission light coming from the sample is originally weak, then the detector will not receive enough light to perform a reliable measurement. In any case, the device requires considerably long measuring times in order to work properly. In the other specifications mentioned above, the light is passed via various light passage elements, such as mirrors and lenses, which impairs the efficiency of the emission light to be measured.

### THE ALPHASCREEN METHOD

A known homogeneous assay method in which the emission light is relatively weak is the so-called AlphaScreen assay method. In the AlphaScreen assay method, two kinds of beads are placed in the sample, whereupon the sample is excited using suitable excitation light, usually a red light having a wavelength of e.g. about 670-690 nm. The excitation light starts a multi-phase chemical reaction between the beads, as a consequence of which the sample emits an emission light e.g. at a wavelength of 520-620 nm, which is a blue-green, green or yellow light. By measuring the emission light, it is possible to establish how effectively the chemical reaction has taken place and what are the properties of the sample being assayed. The difference to fluorescence measurement is that the wavelength of the excitation light is greater than the wavelength of the emission light. In fluorescence measurement, the wavelengths have a reverse relationship.

In the AlphaScreen assay, the energy of the emission light thus largely consists of chemical energy and only partly of excitation light energy, whereas in fluorescence the energy of the emission light comes entirely from the excitation light. Therefore, the emission light in an AlphaScreen assay is neither purely photoluminescence nor purely chemo-luminescence but a combination of these two, so the measuring method can be called a photo-chemical assay method.

However, using prior-art measuring methods and measuring devices, it is difficult to perform an AlphaScreen assay because an AlphaScreen assay requires a higher excitation light efficiency than before. As this AlphaScreen assay still has many good aspects, it would be advantageous to create a sufficiently effective and sensitive measuring method and device for performing it.

### OBJECT OF THE INVENTION

The object of the present invention is to create a new measuring method that is more effective than prior-art methods, especially when the emission light coming from the sample is weak and when easy measurement of the sample is desired.

### THE METHOD OF THE INVENTION

The measuring method of the invention is a time-resolved optical method for measuring a sample placed in a sample well, in which method
- the liquid sample in the sample well is exposed to excitation light obtained from an excitation light source and having a wavelength of about 670-690 nm, preferably about 675-685 nm, from a first side of the sample well in such manner that the admission of the light to the emission light detector is prevented, and
- the emission light, which has a wavelength range of about 520-620 nm, generated by the photo-chemical reaction produced by the excitation light is measured from the liquid sample from a point near the sample well on its second or opposite side after the exposure of the sample to the excitation light has been terminated.

### EXAMPLE 1:

In AlphaScreen measurement, the liquids sample in the sample well is excited using an excitation light that has a wavelength of about 680 nm and a power of at least about 10 mJ per measurement. In practice, an advantageous luminous efficiency is 100-200 mW, but in some cases the efficiency may be as high as 1000 mW, in which case the excitation time is shortened correspondingly. Depending on the power of the excitation light source, a preferable excitation time is e.g. about 100-200 ms, but even longer excitation times can be used. In some cases, however, the excitation time may be as long as 1000 ms. The emission light measuring time is about 100-1000 ms, yet generally at least as long as or longer than the excitation time. A preferable emission light measuring time corresponding to an excitation light duration of 100-200 ms is 400-500 ms.

In AlphaScreen measurement, the emission light signal is heavily time-resolved and the signal can be detected even several seconds after termination of excitation. In this respect, too, AlphaScreen assay differs from fluorescence measurement, where the emission light measuring time for one excitation pulse is e.g. 2 µs.

However, in AlphaScreen measurement it is not possible to collect all the emission signal and thus only a portion of the signal is received into the measuring window. If a very fast measuring device is desired, in which case the measuring window is short, then a large proportion of the signal is lost. In this case, the excitation energy has to be increased correspondingly to achieve a sufficient emission light signal level.

### EXAMPLE 2:

The measuring device is provided with a shutter means between the liquid sample and the detector. The shutter means may be an optical filter, such as several LC filters one upon the other. However, the LC shutter has the disadvantage of a high loss of luminous efficiency, even 50% when the shutter is in the open position. The luminous efficiency is further deteriorated correspondingly when several filters are placed one upon the other. Even when several superimposed filters are used, it is not possible to reach a 100% light shut-off efficiency.

Therefore, when a laser is used, the most effective shutter means interrupting the light passage is a shutter preferably provided with a mechanical shutter plate, which shuts the light passage completely when in the closed position and which has a 0% loss of luminous efficiency when the shutter is in the open position. A mechanical shutter is also sufficiently fast so that there will be no unnecessary loss of emission light signal. A mechanical shutter may have an opening delay of e.g. 5 ms, but this has no significance when the emission light measuring time is e.g. 400-500 ms.

A mechanical shutter also provides the excellent advantage that the detector can be placed as close as possible to the sample well and the liquid sample, on the opposite side relative to the excitation light source. In the most advantageous case, the shutter plate only takes up a space of e.g. 1 mm between the sample well and the detector. Since the detector is nearly in contact with the sample well, no light collecting elements, such as lenses or mirrors, are needed between the detector and the liquid sample. Still, the detector is exposed to all the emission light radiating from the sample in the direction of the detector. In practice, the amount of light collected by the detector may be some 20-30% of the emission light of the sample. Still, this is substantially more than the typical light collecting efficiency of prior-art devices, which is at best about 2%.

The effect of the excitation light can be further increased by providing the shutter plate with a glossy surface on the side facing towards the sample. In this case, the excitation light penetrating the sample well will be reflected back to the sample, enhancing the excitation.

### EMBODIMENTS OF THE MEASURING METHOD OF THE INVENTION

A preferred embodiment of the measuring method of the invention is characterized in
- that the excitation light is passed from the excitation light source to the liquid sample from below the sample well through a transparent bottom,
- that the admission of excitation light through the sample to the emission light detector above the sample well is prevented,
- and that the emission light is measured from the sample from as short a distance as possible from above the sample well.

A second preferred embodiment of the measuring method of the invention is characterized in that, in the measuring method, the excitation light is directed from the excitation light source towards the sample well as a light beam of a widening, preferably conical shape, which in the area of the sample well has a width mainly equal to the width of the sample well.

A third preferred embodiment of the measuring method of the invention is characterized in that, in the measuring method, the distance of the excitation light source from the bottom of the sample well is adjusted so that the light pattern formed by the conical light beam of excitation light in the area of the sample well is mainly the size of the transparent bottom of the sample well.

### THE MEASURING DEVICE OF THE INVENTION

A further object of the invention is to achieve a new optical measuring device that is substantially more efficient than prior-art devices, especially in assays of a weak emission light, such as in AlphaScreen measurements.

### THE MEASURING DEVICE OF THE INVENTION

The measuring device of the invention comprises
- an excitation light source, preferably a laser, disposed on a first side of the sample well and having a wavelength of about 670-690 nm, preferably about 675-685 nm,
- an emission light detector disposed near the sample well on the second or opposite side of the sample well and a shutter means, preferably a mechanical shutter plate, between the sample well and the detector to prevent the admission of excitation light to the detector.

### EMBODIMENTS OF THE MEASURING DEVICE OF THE INVENTION

A preferred embodiment of the measuring device of the invention is characterized in
- that, in the measuring device, the excitation light source is placed below the sample well of a liquid sample,
- that the bottom of the sample well is transparent,
- that a shutter means, such as a mechanical shutter, interference filter or colored glass plate, preventing the admission of excitation light to the detector is provided above the sample well,
- and that the emission light detector is placed above the emission light shutter, preferably with no light collecting elements, such as lenses or mirrors, placed between the detector and the sample well.

A second preferred embodiment of the measuring device of the invention is characterized in
- that, in the measuring device, the excitation light beam proceeding from the excitation light source is a light beam of a widening and preferably conical shape directed towards the sample well,
- and that the excitation light source is disposed at a distance from the sample well such that in the area of the sample well the excitation light beam has a width mainly equal to the width of the sample well.

A third preferred embodiment of the measuring device of the invention is characterized in
- that the excitation light source used in the measuring device is a laser producing a light beam of a widening shape or a laser whose light beam has been given a widening shape by using an optical fiber, a lens or some other photoconductor,
- and that the widening light beam is directed from below towards the transparent bottom of the sample well so that the light pattern produced by the light beam at the level of the bottom of the sample well is mainly the size of the bottom of the sample well.

A fourth preferred embodiment of the measuring device of the invention is characterized in
- that the excitation light source of the measuring device, such as a laser or a laser provided with a photoconductor, is disposed below the sample well and is directed towards the transparent bottom of the sample well,
- and that the measuring device comprises a height adjusting means allowing the distance of the excitation light source from the transparent bottom of the sample well to be varied so that the light pattern produced by the light beam of the excitation light source at the bottom of the sample well is of desired size.

A fifth preferred embodiment of the measuring device of the invention is characterized in that the shutter plate of the emission light shutter of the measuring device has a glossy surface on the side facing towards the sample well to reflect the excitation light penetrating the sample well back to the sample well.

A sixth preferred embodiment of the measuring device of the invention is characterized in that the excitation light source of the measuring device is a pulse laser or a laser provided with a mechanical excitation light shutter.

A seventh preferred embodiment of the measuring device of the invention is characterized in
- that the measuring device has two or more emission light detectors placed side by side for simultaneous measurement of two or more sample wells,
- that the measuring device has at least one shutter means between the sample wells and the detectors to prevent the admission of excitation light to the detector,
- the measuring device has two or more excitation light sources placed side by side to conduct an excitation light to two or more sample wells simultaneously,
- and that the excitation light sources placed side by side consist of two or more lasers or at least one laser with branched light conductors, such as optical fibers, connected to it.

### EMBODIMENT EXAMPLES

In the following, the invention will be described in detail with reference to an example and the attached drawings, wherein

### LIST OF FIGURES

- Fig. 1: presents a partially sectioned diagrammatic side view of a measuring device according to the invention
- Fig. 2: presents an operating diagram of the measuring device of Fig. 1,
- Fig. 3: corresponds to Fig. 1 and presents the measuring device according to a second embodiment,
- Fig. 4: corresponds to Fig. 1 and presents the measuring device according to a third embodiment,
- Fig. 5: corresponds to Fig. 1 and presents the measuring device according to a fourth embodiment.

### DESCRIPTION OF THE FIGURES

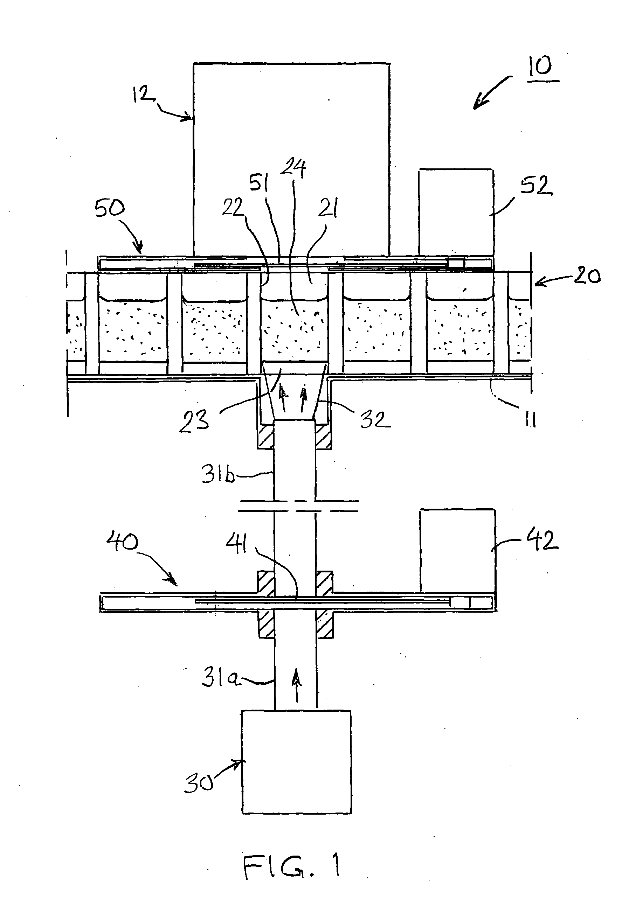

Fig. 1 presents an optical measuring device 10 applicable for use in photoluminescence or fluorescence measurements. The measuring device 10 comprises a support 11 for a sample plate 20. In the embodiment of the invention illustrated in Fig. 1, the sample plate being measured in the measuring device 10 is a sample plate 20 comprising a plurality of sample wells 21. Such sample plates 20 are e.g. prior-art microtiter plates. The samples 24 placed in the sample wells 21 are in liquid form. Naturally the samples can be placed in any type of sample plates and the measurement can also be performed on samples placed in individual containers.

The walls 22 of the sample wells 21 in the sample plate 20 are made of white plastic. The purpose of the white color is to enhance the distribution of the excitation light applied to the sample 24 as evenly as possible throughout the sample 24. However, the sample plate 20 may be made of a material of any color. If it is desirable to ensure that the admission of light through the wall into the adjacent well is prevented, then e.g. a black material will be advantageous. In this case, to reflect the excitation light and distribute it evenly, the surface of the wall may be coated e.g. with a white or glossy material. The bottoms 23 of the sample wells 21 are made of clear transparent plastic, allowing the excitation light to be applied to the sample 24 from below through the bottom 23.

In the measuring device 10 presented in Fig. 1, the excitation light is generated by a continuous-action laser 30 with an optical fiber 31 a directly connected to it. The excitation light produced by the laser 30 has a wavelength of about 680 nm and is conducted via successive optical fibers 31 a and 31 b to the sample 24 so that the light is directed from below to the transparent bottom 23 of the sample well 21. From the end of the optical fiber 31 b, the excitation light proceeds as a slightly conical light beam 32 and is evenly distributed throughout the sample 24.

The optical fiber leading from the laser 30 to the sample 24 is composed of two successive optical fiber sections 31 a and 31 b, because between these sections 31 a and 31 b is placed an excitation light shutter 40 functioning as a light chopper. A shutter 40 is needed in the case of a continuous-action laser 30. The open time of the shutter 40 determines the duration of the excitation light. In this example embodiment presented in Fig. 1, the shutter 40 is a mechanical shutter with a shutter plate 41 that can be moved into and away from the gap between the optical fibers 31 a and 31 b. The actuator 42 used to move the shutter plate 41 comprises e.g. a solenoid or an electric motor combined with a return spring, which are not shown in the figures.

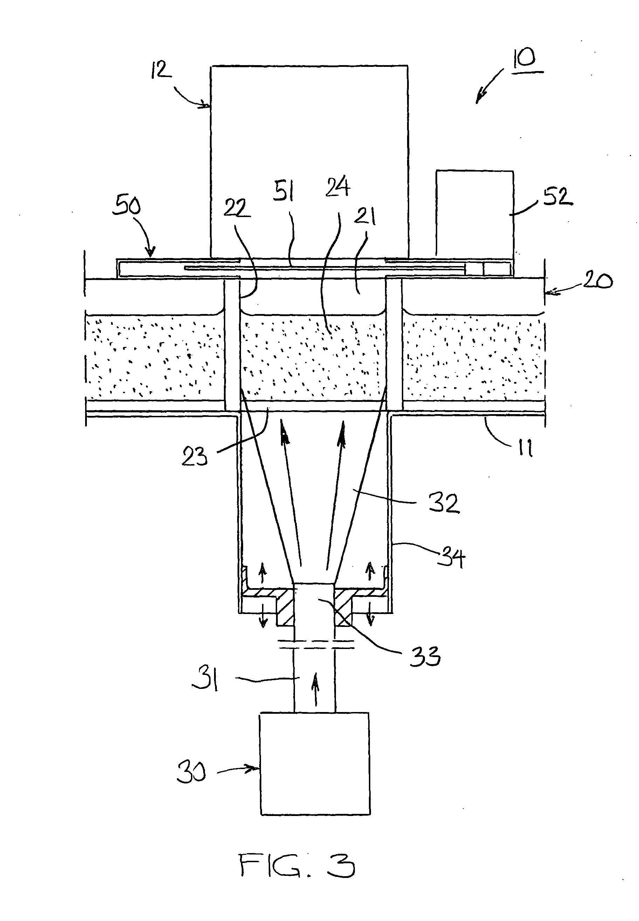

However, the laser 30 presented in Fig. 1 may also be a pulse laser, in which the light produced by the laser can be chopped electronically. In this case, no mechanical shutter 40 is needed between the laser 30 and the sample 24. Examples of this type are presented below in figures 3-5.

In the measuring device 10 in Fig. 1, the emission light generated in the sample 24 is detected by a detector 12 placed above the sample well. The detector is e.g. a channel photomultiplier tube. To ensure that the excitation light coming from the laser 30 will not be admitted through the sample 24 to the detector 12, an emission light shutter 50 is provided between the sample plate 20 and the detector 12.

In this example embodiment presented in Fig. 1, the emission light shutter 50 is also a mechanical shutter whose shutter plate 51 can be moved mechanically into and away from a position before the detector 12. The actuator 52 of the shutter plate 51 also comprises e.g. a solenoid or an electric motor combined with a return spring, which are not shown in the figure. However, in Fig. 1, the emission light shutter 50 between the sample well and the emission light detector may also consist of an interference filter or a colored glass plate. These examples are not shown in the figures.

The operation of the measuring device of Fig. 1 is such that, to perform a measurement, that sample well 21 in the sample plate 20 which contains the sample 24 to be measured is brought to a measuring position between the optical fiber 31 b and the detector 12. The excitation light laser 30, which preferably is a solid-state laser, is continuously in operation. By chopping the light of the laser 30 by means of the mechanical shutter 40, the smoothness of the excitation light can be well controlled.

Before the start of the actual measuring process, emission light shutter 50 is closed, thus preventing the admission of the excitation light coming from the laser 30 to the detector 12. The measuring process is started when the excitation light shutter 40 is opened and the red light coming from the laser 30, which has a wavelength of about 680 nm, is admitted to the sample 24 through the optical fibers 31 a and 31 b and the transparent bottom 23 of the sample well 21. The excitation light is evenly distributed in the sample 24 because the light is diffused in the sample 24, being also reflected from the white walls 22 of the sample well 21. The excitation light is also reflected back to the sample 24 from the shutter plate 51 of the emission light shutter 50 above sample well 21, the shutter plate being provided with a glossy surface on its lower side to achieve more effective reflection.

The excitation process is terminated when the excitation light shutter 40 is closed. After that, the emission light shutter 50 is opened as quickly as possible, whereupon the emission light produced in the sample 24 as a result of a photochemical process and having a wavelength in the range of e.g. about 520-620 nm, depending on the material being measured, is admitted to the detector 12, which is placed above the sample well 21 as close to it as possible. As there are no light-dampening optical focusing or transfer elements, such as lenses or optical fibers, between the sample 24 and the detector 12 and as the distance from the sample 24 to the detector is extremely short, preferably only a few millimeters, the measuring device 10 has an optimal measuring efficiency.

However, placed between the sample 24 and the detector 12 is an emission light shutter 50 of a relatively small size, the mechanism and shutter plate of which are made of metal. To ensure that no voltage difference disturbing the measurement will arise between the metallic emission light shutter 50 and the cathode of the channel multiplier tube of the detector 12, the metallic structure of the shutter 50 is grounded and the anode of the detector 12 is connected to a positive high voltage.

The above-described measuring process is terminated when the detector 12 has received from the emission light produced in the sample 24 a sufficient number of photons for the assay to be measured. The measurement is then terminated and the emission light shutter 50 remains open.

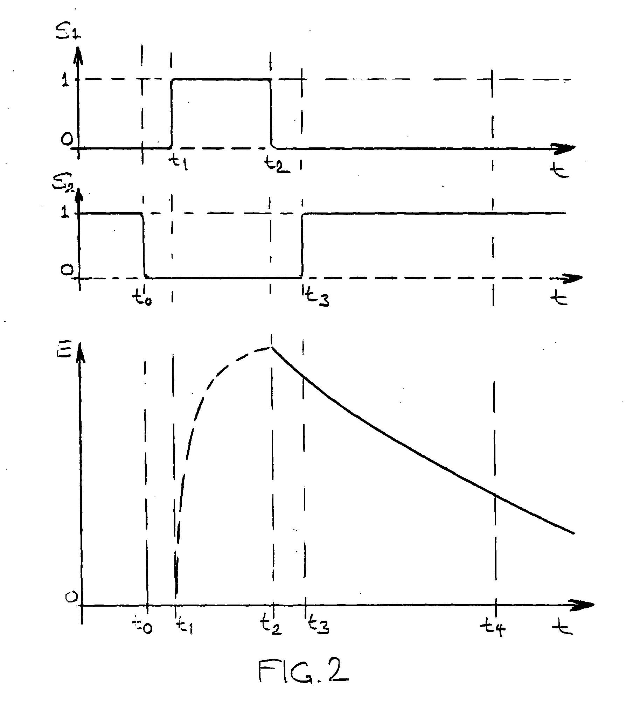

Fig. 2 presents a diagram representing the operation of the excitation light shutter 40 (curve S₁) of the measuring device 10 of Fig. 1 in a measuring situation and the operation of the emission light shutter 50 (curve S₂) as well as the efficiency of the emission light of the sample 24 (curve E) as a function of time (t). The operation of both shutters is described by using a 0 value for the closed position of the shutter and a 1 value for the open position. For the emission light efficiency curve E, no absolute value is presented. The curve only describes diagrammatically the relative change in the number of photons counted.

Before the measurement, the emission light shutter is in the open position (S₂ = 1) and the excitation light shutter in the closed position (S₁ = 0). The measuring process is started at instant t₀ when the emission light shutter is closed (S₂ = 0). A little later, at instant t₁, the excitation light shutter is opened (S₁ = 1). At the same instant t₁, the emission from the sample is also started. The increase of emission efficiency E during excitation between instants t₁ -> t₂ is represented by a broken line because in this situation the curve form is unimportant.

The excitation process is terminated at instant t₂ as the excitation light shutter is closed (S₁ = 0). The emission efficiency E of the sample has now reached its maximum value and the emission immediately begins to decline. For this reason, the emission light shutter is opened (S₂ = 1) as soon as possible after the termination of excitation at instant t₃ and the emission measurement by the detector is started. The shutter delay t₂ -> t₃ is e.g. about 5 ms. Although an electronically controllable LC shutter is faster, the aforesaid delay of a mechanical shutter is of no significance. What is essential are the advantages of a mechanical shutter, as explained above.

The counting of emission photons is ended and the whole measuring process is terminated at instant t₄. The emission light shutter remains open (S₂ = 1). In the example described, the operation of the shutter has been so arranged that the shutter plate is closed by a motor. At other times, the shutter plate is held in the open position by a spring.

In an example situation, the open time of the excitation light shutter 40 is t₁ -> t₂, in other words, the excitation time of the AlphaScreen sample is about 100 ms and the emission light measuring time t₃ -> t₄ is about 200 ms.

Fig. 3 presents a laboratory measuring device 10 according to a second embodiment of the invention. For the measurement, the device 10 presented in Fig. 3 is provided with a sample plate 20 in which the sample wells 21 are larger than in the measuring device presented in Fig. 1. The excitation light is passed from the laser 30 to the sample 24 in a similar manner through the transparent bottom 23 of the sample well 21. The light conductor used may also be an optical fiber 31 just as in Fig. 1.

However, since the sample well 21 in Fig. 3 is larger, an optical fiber 31 placed close to the well 21 would give too narrow a light beam, which would not be evenly distributed in the sample 24. Therefore, the end 33 of the optical fiber 31 is placed in an adjustment means 34, wherein the height position of the end 33 of the optical fiber 31 can be changed. The end 33 of the optical fiber 31 can now be adjusted to a distance from the sample well 21 such that the conical light beam 32 coming from the optical fiber 31 produces on the bottom 23 of the sample well 21 a light spot exactly the size of the bottom. By using height adjustment of the end 33 of the optical fiber 31, the excitation light can be evenly distributed in any size of sample well 21.

In the embodiment example presented in Fig. 3, no excitation light shutter is provided in conjunction with the optical fiber 31 because the laser 30 used in this case is a pulse laser, in which the length of the light pulse given by the laser can be adjusted electronically.

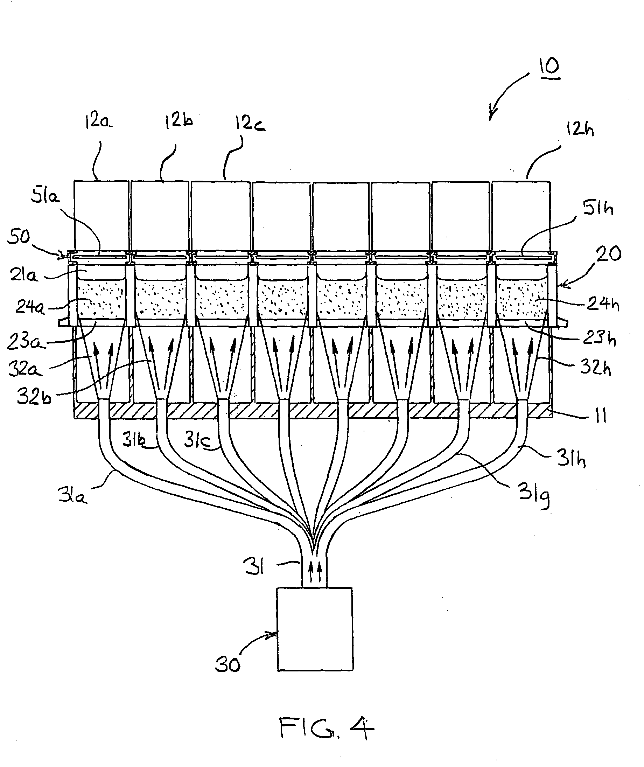

Fig. 4 presents an eight-channel measuring device 10 as a preferred example embodiment, which allows eight simultaneous measurements. Of course, any other number of channels may also be used, but eight channels is preferable because a much used 96-well microtiter plate has eight sample wells side by side. Thus, using a measuring device 10 as illustrated in Fig. 4, it is possible to measure a whole row of sample wells 21 simultaneously from a microtiter plate 20 placed on the support 11. After one row has been measured, the microtiter plate 20 is moved on and the next row is measured.

In the measuring device 10 of Fig. 4, the optical fiber connected to the laser 30 is divided into eight branches 31 a-31 h, through which the excitation light can be applied simultaneously to the eight measuring points. In Fig. 4, a microtiter plate 20 is so placed in the measuring position in the measuring device 10 that the excitation light can be passed simultaneously through the transparent bottoms 23a-23h of the eight sample wells 21 a-21 h into the samples 24a-24h. The laser 30 used in Fig. 4 is an adjustable pulse laser. Alternatively, the laser 30 is a continuous-action laser, in which case an excitation light shutter is placed in the optical fiber 31 as illustrated in Fig. 1.

In Fig. 4, an emission light shutter 50 comprising eight shutter plates 51 a-51 h are placed above the sample wells 21a-21h, and above these there are eight detectors 12a-12h. The shutter plates 51 a-51 h of the emission light shutter 50 prevent the admission of excitation light to the detectors 12a-12h during excitation. After the excitation process, the shutter 50 is opened and emission measurement of the eight sample wells 21 a-21 h is started simultaneously by the eight detectors 12a-12h.

The measuring device 10 of Fig. 4 can be modified e.g. by connecting a height adjustment means 34 to the end of each optical fiber 31 a-31 h as illustrated in Fig. 3. In this case, the ends 31 a-31 h of the optical fibers can be placed alternatively either in contact with the sample wells 21 a-21 h or at a distance from them. In Fig. 4, the ends 31 a-31 h of the optical fibers are placed at a distance such that the conical excitation light beams 32 produce light spots exactly the size of the sample well bottoms on the bottoms of the sample wells 21 a-21 h. If placed at a closer distance, the optical fibers 31 a-31 h would produce light spots much smaller than the bottoms of the sample wells 21a-21h.

However, small light spots can be utilized e.g. in cases where, using the same measuring device, another sample plate containing a considerably larger number of sample wells, e.g. 384 sample wells, has to be measured. Such a sample plate containing 384 sample wells has twice as many sample wells in each row as a sample plate containing 96 sample wells, i.e. 16 sample wells side by side. Since the sample wells in a sample plate containing a larger number of sample wells are naturally much smaller, excitation light spots of a suitable small size are produced for these wells by bringing the optical fibers close to the bottoms of the sample wells. Although the above-described example device has only eight detectors side by side, placed at mutual distances designed for the measurement of a sample plate containing 96 sample wells, the small sample wells of a sample plate containing 384 sample wells can be measured by first measuring every second well. After that, the microtiter plate is moved laterally through a small distance, whereupon the remaining every second well are measured.

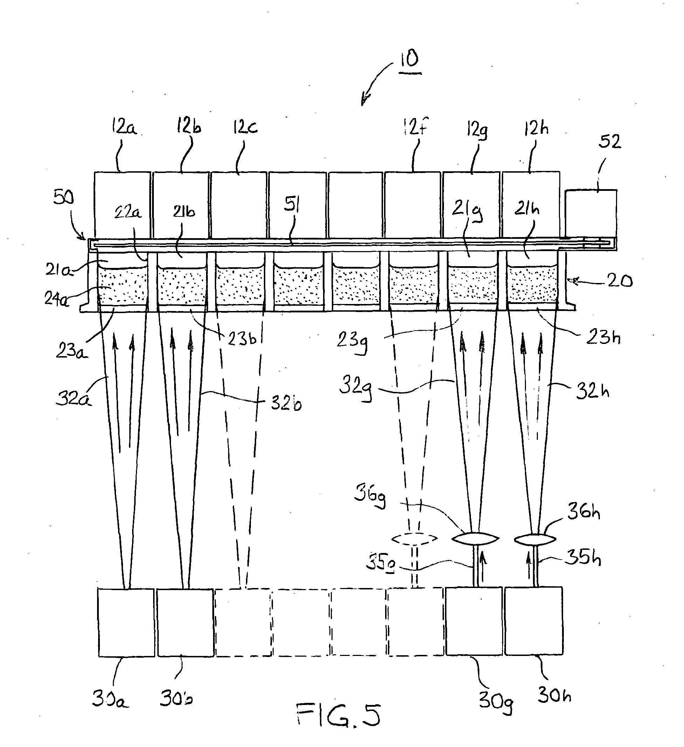

Fig. 5 also presents a multi-channel measuring device 10 that allows a plurality of measurements to be carried out simultaneously. The measuring device 10 of Fig. 5 has an emission light detector 12a-12h above each sample well 21 a-21 h to be measured at the same time. The detectors 12a-12h are placed as close to the sample wells 21a-21h as possible, with only a thin emission light shutter 50 between them. The shutter 50 comprises an actuator 52 and one shutter plate 51 with a glossy lower surface, which is turned to a position before the detectors 12a-12h to protect them during excitation.

The measuring device 10 of Fig. 5 also has a plurality of separate lasers 30a-30h, one below each sample well 21 a-21 h to be measured simultaneously. From each laser 30a-30h, a separate excitation light beam 32a-32h is passed through the bottom 23a-23h of one sample well 21 a-21 h to be measured and into the sample 24a-24h placed in the sample well 21a-21h.

As an example, Fig. 5 illustrates two different ways of directing the light beam 32a-32h to the bottom 23a-23h of the sample well 21a-21h. The light of lasers 30a, 30b is passed to the bottom 23a-23h of sample wells 21 a, 21 b directly without any intermediate elements. This is possible because the light beam produced by lasers 30a-30b is a widening beam 32a-32b. The distance of lasers 30a-30b from the bottoms 23a-23b of sample wells 21a-21 b only has to be suitably adjusted so that the light spots formed by light beams 32a-32b on the bottoms 23a-23b of sample wells 21 a-21 b are mainly the size of the bottoms 23a-23b.

The other way of directing the light beam to the bottom of the sample well illustrated in Fig. 5 is presented in connection with lasers 30g-30h. The light beams produced by these lasers 30g-30h are not widening beams but narrow and straight light beams 35g-35h, which as such would be too narrow for the sample wells 21g-21h. Therefore, lenses 36g-36h are provided before the lasers 30g-30h to diverge the narrow light beams 35g-35h into widening beams 32g-32h. By moving the lenses 36g-36h and/or the lasers 30g-30h to a suitable distance from the bottoms 23a-23b of the sample wells 21-21 b, light spots the size of the bottoms 23a-23b can be produced on the bottoms 23a-23b of the sample wells 21-21 b.

### ADDITIONAL REMARKS

It is obvious to the person skilled in the art that different embodiments of the invention may be varied within the scope of the claims presented below.

### LIST OF REFERENCE NUMBERS

- 10: measuring device
- 11: support
- 12: detector
- 20: sample plate
- 21: sample well
- 22: wall
- 23: bottom
- 24: sample
- 30: laser
- 31: optical fiber
- 32: light beam
- 33: end of light beam
- 34: adjusting means
- 35: straight light beam
- 36: lens
- 40: excitation light shutter
- 41: shutter plate
- 42: actuator
- 50: emission light shutter
- 51: shutter plate
- 52: actuator

## Claims

1. A time-resolved optical method for measuring a liquid sample (24) placed in a sample well (21), in which method
- the liquid sample (24) in the sample well (21) is exposed to excitation light (32) obtained from an excitation light source (30) and having a wavelength of about 670-690 nm, preferably about 675-685 nm, from a first side of the sample well in such manner that the admission of the light to an emission light detector (12) is prevented, and
- the emission light, which has a wavelength range of about 520-620 nm, generated by the photo-chemical reaction produced by the excitation light (32) is measured from the liquid sample (24) from a point near the sample well (21) on its second or opposite side after the exposure of the sample to the excitation light has been terminated.

2. A measuring method according to claim 1, **characterized in**
- **that** in the measuring method the excitation light (32) is passed from the excitation light source (30) to the liquid sample (24) from below the sample well (21) through a transparent bottom (23),
- **that** admission of the excitation light (32) through the sample (24) to the emission light detector (12) placed above the sample well (21) is prevented,
- and **that** the emission light is measured from the sample (24) from as short a distance as possible from above the sample well (21).

3. A measuring method according to claim 1 or 2, **characterized in that**, in the measuring method, the excitation light (32) is directed from the excitation light source (30) to the sample well (21) as a light beam of a widening, preferably conical shape, which in the area of the sample well has a width mainly equal to the width of the sample well.

4. A measuring method according to claim 1, 2 or 3, **characterized in that**, in the measuring method, the distance of the excitation light source (30) from the bottom (23) of the sample well (21) is adjusted so that the light pattern formed by the conical light beam of excitation light (32) in the area of the sample well is mainly the size of the transparent bottom of the sample well.

5. An optical time-resolved measuring device (10), comprising
- an excitation light source (30), preferably a laser, disposed on a first side of a sample well (21) and having a wavelength of about 670-690 nm, preferably about 675-685 nm,
- an emission light detector (12) disposed near the sample well on the second or opposite side of the sample well (21), and a shutter means (50), preferably a mechanical shutter plate (51), between the sample well and the detector to prevent the admission of excitation light to the detector.

6. An optical measuring device (10) according to claim 5, **characterized in**
- **that**, in the measuring device (10), the excitation light source (30) is placed below the sample well (21) of a liquid sample (24),
- **that** the bottom (23) of the sample well (21) is transparent,
- **that** a shutter means (50), such as a mechanical shutter, interference filter or colored glass plate, preventing the admission of excitation light (32) to the detector (12) is provided above the sample well (21),
- and **that** the emission light detector (12) is placed above the emission light shutter means (50), preferably with no light collecting elements, such as lenses or mirrors, between the detector and the sample well (21).

7. An optical measuring device (10) according to claim 5 or 6, **characterized in**
- **that**, in the measuring device (10), the excitation light beam (32) proceeding from the excitation light source (30) is a light beam of a widening and preferably conical shape directed towards the sample well (21),
- and **that** the excitation light source (30) is disposed at a distance from the sample well (21) such that in the area of the sample well the light beam of excitation light (32) has a width mainly equal to the width of the sample well.

8. An optical measuring device (10) according to claim 5, 6 or 7, **characterized in**
- **that** the excitation light source (30) used in the measuring device (10) is a laser producing a light beam (32) of a widening shape or a laser whose light beam has been given a widening shape by using an optical fiber (31), a lens (36) or some other photoconductor,
- and **that** the widening light beam (32) is directed from below towards the transparent bottom (23) of the sample well (21) so that the light pattern produced by the light beam at the level of the bottom of the sample well is mainly the size of the bottom of the sample well.

9. An optical measuring device (10) according to any one of claims 5-8, **characterized in**
- **that** the excitation light source (30) of the measuring device (10), such as a laser or a laser provided with a photoconductor (31, 36), is disposed below the sample well (21) and is directed towards the transparent bottom (23) of the sample well,
- and **that** the measuring device (10) comprises a height adjusting means (34) allowing the distance of the excitation light source (30) from the transparent bottom (23) of the sample well (21) to be varied so that the light pattern produced by the light beam (32) of the excitation light source at the level of the bottom of the sample well is of desired size.

10. An optical measuring device (10) according to any one of claims 5-9, **characterized in that** the shutter plate (51) of the emission light shutter (50) of the measuring device (10) has a glossy surface on the side facing towards the sample well (21) to reflect the excitation light (32) penetrating the sample well back to the sample well.

11. An optical measuring device (10) according to any one of claims 5-10, **characterized in that** the excitation light source (30) of the measuring device (10) is a pulse laser or a laser provided with a mechanical excitation light shutter (40).

12. An optical measuring device according to any one of claims 5-10, **characterized in**
- **that** the measuring device (10) has two or more emission light detectors (12) placed side by side for simultaneous measurement of two or more sample wells (21),
- **that** the measuring device (10) has at least one shutter means (50) between the sample wells (21) and the detectors to prevent the admission of excitation light to the detector (12),
- the measuring device (10) has two or more excitation light sources (30) placed side by side to conduct an excitation light (32) to two or more sample wells (21) simultaneously,
- and **that** the excitation light sources (30) placed side by side consist of two or more lasers or at least one laser with branched light conductors (31), such as optical fibers, connected to it.
